# EUROPEAN PATENT SPECIFICATION

(11) **EP 4 179 748 B1**
(45) Date of publication and mention of the grant of the patent: **01.10.2025**
(21) Application number: 20757931.9
(22) Date of filing: 25.08.2020
(51) Int. Cl.: H04W 4/80, H04W 12/08, H04W 28/02, H04W 4/50, H04W 88/04

(54) **USER EQUIPMENT TETHERING POLICY**
TETHERING-RICHTLINIE FÜR BENUTZERGERÄT
POLITIQUE DE RATTACHEMENT D'ÉQUIPEMENT UTILISATEUR

(30) Priority: 08.07.2020 EP 20382610
(43) Date of publication of application: 17.05.2023
(73) Proprietor: Telefonaktiebolaget LM ERICSSON (PUBL), 16483 Stockholm (SE)
(72) Inventor: MUÑOZ DE LA TORRE ALONSO, Miguel Angel, 28002 Madrid (ES); LOHMAR, Thorsten, 52072 Aachen (DE)
(74) Representative: Murgitroyd & Company
(86) International application number: PCT/EP2020/073776
(87) International publication number: WO 2022/008089

(56) References cited:
- WO-A1-2019/223557
- WO-A1-2019/238252
- WO-A1-2020/072652
- US-A1- 2012 240 197
- US-A1- 2020 008 101

## Description

### TECHNICAL FIELD

The present invention generally relates to the provisioning of policy rules in mobile networks, and more specifically, the invention relates to the provisioning of policy rules to a User Equipment.

### BACKGROUND

Tethering refers to the coupling of a tethering device, such as a computer, with a tethering-enabled device providing a so-called hotspot, such as a mobile phone, so that the tethering device is able to use the mobile connection and data plan service of the tethering-enabled device. The mobile phone is configured to behave as a modem, providing network connection to the tethering device. The coupling between the tethering device and the tethering-enabled device can be via a data cable, such as a USB cable or a proprietary cable, or be over wireless LAN (Wi-Fi), over Bluetooth or a proprietary communication protocol, to name a few.

The use of mobile phones as modems for other devices to access the Internet has caused a serious concern for telecom carriers (also referred to as wireless carriers, network operators or mobile network operators) who are not contracted or paid for use of their mobile networks to be accessed in such a way as to provide Internet services to laptops, computers, tablets or third party users.

Wireless carriers are working to identify tethering traffic and apply specific policies to it, for example blocking unauthorized or inappropriate tethering traffic, applying a specific Quality of Service or routing rules, charge it in a different way, etc. Nowadays this is possible using solutions implemented in the network gateways, for example tethering traffic is identified by using fingerprinting techniques, trying to detect patterns that indicate that the source of the traffic is not the mobile device. Actions that are performed to the tethering traffic are for example counting the number of tethered devices, blocking the tethering traffic if the subscriber has not requested the service, blocking based on the number of tethering devices, application of a different tariff, change the Quality of Service, report the detection of tethering devices or tethering traffic.

The concept of Tethering can also be applied to other scenarios as well. For example, a 5G-RG (5G Residential Gateway) is a special UE device, which is offering connectivity for in-home devices, fixed and mobile. The devices connected to the 5G-RG are tethering devices, and in this case the network operator may want to offer specific services or apply specific policies to the devices connected to the 5G-RW.

Patent application WO 2019/223557A1 disclose methods for enabling a user equipment (UE) to access the 5G through a residential gateway (5G-RG). The 5G-RG is provided with local resource control policies based on whether the UE is identified as a host UE or a guest UE.

Patent application US 2012240197A1 discloses a system and method for controlling access to a mobile hotspot on a mobile device utilizing a hotspot management application. The method includes detecting unauthorized data traffic over a tethered link between the mobile device and a tethered device by analyzing a signature of the unauthorized data traffic. Analyzing the signature of the unauthorized data traffic may be carried out utilizing a rules engine, where the rules engine is based on one or more carrier controlled tethering policies and one or more user controlled tethering policies. The method further includes controlling the unauthorized data traffic. The method additionally includes redirecting a user of the mobile device to a captive portal for authorized tethering plan support.

Patent application US2020008101A1 relates to methods, devices, and systems for managing tethered traffic based on thresholds set for the tethered traffic. Traffic received from a mobile device may be tagged based on whether the traffic originates from the mobile device or from a tethered device connected to the mobile device. Based on usage thresholds associated with a user of the mobile device, traffic originating from the tethered devices may be throttled when an amount of the traffic originating from the tethered devices exceeds a threshold.

Patent application WO 2019/238252A1 relates to the application by a cellular network of a policy for data packets sent using the tethering mechanism.

A problematic aspect is that wireless carriers have failed to come up with adequate solutions to completely identify the tethering traffic. There is currently no solution that is able to completely detect and control tethering traffic, especially as the traffic encryption is growing and encrypted traffic cannot be inspected at the network side. Besides, some users hack their mobile devices to avoid tethering detection on the network side.

### SUMMARY

An object of the invention is to enable the detection of tethering traffic and the application of tethering policies to such traffic.

A first aspect of the invention relates to a method for enforcing tethering policies at a User Equipment, as further defined in claim 1. The method includes receiving a tethering policy from a Control Plane (CP) entity of a mobile communication system, the tethering policy including actions to apply to the traffic of tethered devices, and applying the tethering policy to the traffic of a tethered device. In an embodiment of the method, the tethering policy includes an indication to block the traffic of a tethered device. In an embodiment of the method, the tethering policy includes an indication to only allow traffic transmission of a maximum number of tethered devices connected simultaneously. In an embodiment of the method, the tethering policy includes an indication to mark the traffic of a tethered device with a specific value included in a protocol header, the value being the same for all tethered devices or different for each tethered device. In an embodiment of the method, the tethering policy includes an indication to report an event to the CP entity or another CP entity in response to the detection of traffic of a tethered device. In an embodiment of the method, the indication to report the event comprises an indication to report the number of tethered devices, the detection of a new tethered device, or the volume of the traffic of a tethered device. In an embodiment of the method, applying the tethering policy comprises transmitting a report to the CP entity or another CP entity including the number of tethered devices, the detection of a new tethered device, or the volume of the traffic of a tethered device. In an embodiment of the method, the tethering policy is received from an access and mobility management entity in a Protocol Data Unit session response message or in a UE Route Selection Policy, URSP. In an embodiment of the method, the tethering policy is received from a policy control entity in a UE Route Selection Policy (URSP).

The method of claim 1 further includes receiving subscription information from a subscriber data repository entity of a mobile communication system, the subscription information including an indication of actions to apply to the traffic of tethered devices at the UE, and transmitting to the UE the tethering policy including the received actions to apply to the traffic of tethered devices.

Advantageously, the solution disclosed herein enables the detection of tethering traffic at the UE in a simple an efficient way, which would be not possible to detect at the network side, for example when the traffic is encrypted.

Further advantageously, the solution disclosed herein enables the control of tethering traffic at the UE, and the application of tethering policies at the UE which would be not possible to apply at the network side.

Further advantageously, the solution disclosed herein enables the marking of tethering traffic at the UE and the application of tethering policies at the network side based on that marking.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The invention may best be understood by referring to the following description and accompanying drawings that are used to illustrate particular embodiments of the invention. In the drawings:
Figure 1 is a networked system in accordance with particular embodiments of the solution described herein;
Figure 2 is a signaling diagram illustrating a procedure according to particular embodiments of the solution described herein;
Figure 3 is a signaling diagram illustrating a procedure according to particular embodiments of the solution described herein;
Figure 4 is a signaling diagram illustrating a procedure according to particular embodiments of the solution described herein;
Figure 5 is a flowchart illustrating a method performed by a UE according to particular embodiments of the solution described herein;
Figure 6 is a flowchart illustrating a method performed by a mobile network node according to particular embodiments of the solution described herein;
Figure 7 is a flowchart illustrating a method performed by a mobile network node according to particular embodiments of the solution described herein;
Figure 8 is a block diagram of a mobile network node configured in accordance with particular embodiments of the solution described herein.
Figure 9 is a block diagram of a UE configured in accordance with particular embodiments of the solution described herein.

### DETAILED DESCRIPTION

The invention will now be described in detail hereinafter with reference to the accompanying drawings, in which examples of embodiments or implementations of the invention are shown. The invention may, however, be embodied or implemented in many different forms and should not be construed as limited to the embodiments set forth herein. Rather, these embodiments are provided so that this disclosure will be thorough and complete, and will fully convey the scope of present invention to those skilled in the art. It should also be noted that these embodiments are not mutually exclusive. Components from one embodiment may be tacitly assumed to be present/used in another embodiment. These embodiments of the disclosed subject matter are presented as teaching examples and are not to be construed as limiting the scope of the disclosed subject matter. For example, certain details of the described embodiments may be modified, omitted, or expanded upon without departing from the scope of the described subject matter.

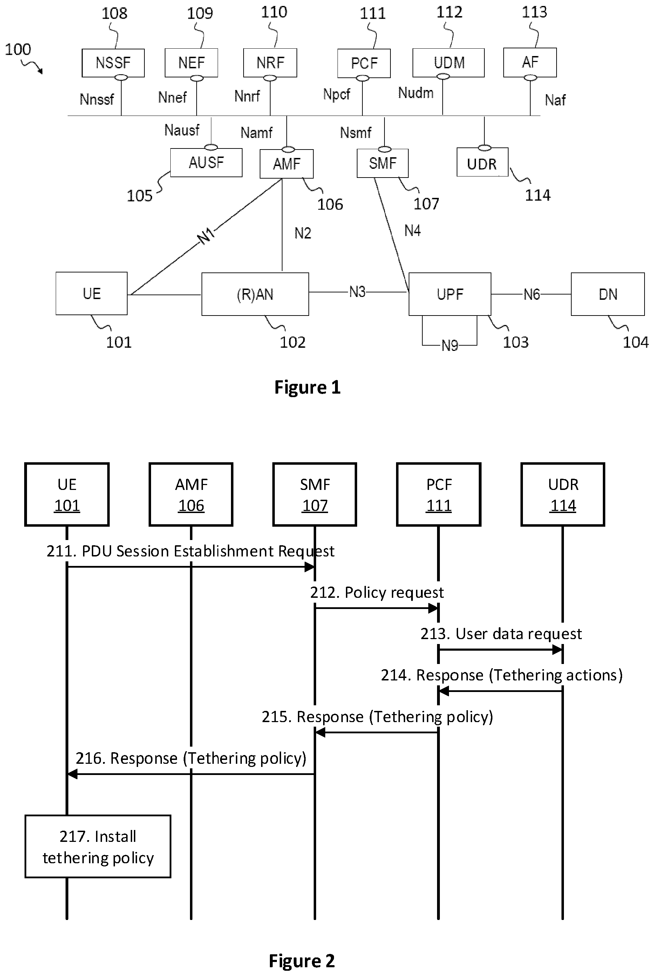

The example embodiments described herein arise in the context of a telecommunications network, including but not limited to a telecommunications network that conforms to and/or otherwise incorporates aspects of a fifth generation (5G) architecture. Figure 1 is an example networked system 100 in accordance with example embodiments of the present disclosure. Figure 1 specifically illustrates User Equipment (UE) 101, which may be in communication with a (Radio) Access Network (RAN) 102 and Access and Mobility Management Function (AMF) 106 and User Plane Function (UPF) 103. The AMF 106 may, in turn, be in communication with core network services including Session Management Function (SMF) 107 and Policy Control Function (PCF) 111. The core network services may also be in communication with an Application Server/ Application Function (AS/AF) 113. Other networked services also include Network Slice Selection Function (NSSF) 108, Authentication Server Function (AUSF) 105, User Data Management (UDM) 112, User Data Repository (UDR) 114, Network Exposure Function (NEF) 109, Network Repository Function (NRF) 110 and Data Network (DN) 104. In some example implementations of embodiments of the present disclosure, an AMF 106, SMF 107, UPF 103, PCF 111, AUSF 105, NRF 110, UDM 112, UDR 114, NEF 109, AF 113, and NSSF 108 are each considered to be an NF. One or more additional instances of the network functions (NF) may be incorporated into the networked system.

3GPP TS 24.526 describes the UE policies for 5G system, which are delivered from the PCF to the UE. The UE policies include UE route selection policies (URSP) and Access network discovery and selection policies (ANDSP).

The network (PCF) installs URSP rules in the UE. A URSP rule includes a traffic descriptor and a list of route selection descriptors as specified in 3GPP TS 23.503. The traffic descriptor can include an application descriptor in the form of an application identifier or a traffic filter.

The solution described herein aims to enable the detection of tethering traffic and the application of tethering policies to such traffic.

To achieve such object, this disclosure provides a method performed by a UE 101, an access and mobility management entity, a session management entity, a policy control entity and a user data repository entity. In some embodiments, the access and mobility management entity is an AMF 106. In some embodiments, the session management entity is a SMF 107. In some embodiments, the policy control entity is a PCF 111. In some embodiments, the user data repository entity is a UDR 114.

The method comprises receiving subscription information at the policy control entity from the subscriber data repository entity, the subscription information including an indication of actions to apply to the traffic of tethered devices at the UE; transmitting from the policy control entity to the UE a tethering policy including the received actions to apply to the traffic of tethered devices; and applying at the UE the tethering policy to the traffic of a tethered device.

In some embodiments of the method, the tethering policy includes an indication to block the traffic of a tethered device. In some embodiments of the method, the tethering policy includes an indication to only allow traffic transmission of a maximum number of tethered devices connected simultaneously. In some embodiments of the method, the tethering policy includes an indication to mark the traffic of a tethered device with a specific value included in a protocol header, the value being the same for all tethered devices or different for each tethered device. In some embodiments of the method, the tethering policy includes an indication to report an event to the CP entity or another CP entity in response to the detection of traffic of a tethered device. In some embodiments of the method, the indication to report the event comprises an indication to report the number of tethered devices, the detection of a new tethered device, or the volume of the traffic of a tethered device. In some embodiments of the method, applying the tethering policy comprises transmitting a report including the number of tethered devices, the detection of a new tethered device, or the volume of the traffic of a tethered device. In some embodiments of the method, the tethering policy is received at the UE from an access and mobility management entity in a Protocol Data Unit session response message or in a UE Route Selection Policy, URSP. In some embodiments of the method, the tethering policy is received at the UE from a policy control entity in a UE Route Selection Policy, URSP.

This disclosure also provides mobile network nodes, particularly a Control Plane entity 800 and a UE 900, each configured to perform the respective methods as described herein. This disclosure also provides the corresponding computer program comprising code, for example in the form of a computer program, that when run on processing circuitry of the mobile network nodes causes the mobile network nodes to perform the disclosed methods.

Advantageously, the solution disclosed herein enables the detection of tethering traffic at the UE in a simple an efficient way, which would be not possible to detect at the network side, for example when the traffic is encrypted.

Further advantageously, the solution disclosed herein enables the control of tethering traffic at the UE, and the application of tethering policies at the UE which would be not possible to apply at the network side.

Further advantageously, the solution disclosed herein enables the marking of tethering traffic at the UE and the application of tethering policies at the network side based on that marking.

Hereinafter, drawings showing examples of embodiments of the solution are described in detail.

Figure 2 is a signaling diagram illustrating a procedure for provisioning tethering policies to a UE at PDU session establishment. In this figure, the access and mobility management entity is an AMF 106, the session management entity is a SMF 107, the policy control entity is a PCF 111 and the user data repository entity is a UDR 114. Prior to the execution of this procedure, the UDR shall be provisioned with the corresponding subscription data indicating that the UE is subject to the appropriate tethering policies.

At step 211, the UE 101 triggers the PDU Session Establishment procedure, sending a PDU session establishment request to the SMF. This request is relayed by the AMF. As part of this procedure, the AMF 106 creates the policy association with the PCF 111.

At step 212, the SMF 107 creates the policy association with the PCF 111 and sends to the PCF a request to retrieve the policies for the user.

At step 213, the PCF sends to UDR a request for the corresponding subscription data.

At step 214, the PCF retrieves from UDR the subscriber policy profile including a tethering policy including actions to apply to the traffic of tethered devices.

At step 215, the PCF generates and transmits to the SMF the PCC rules including the tethering policy. The tethering policy may include:
- Precedence: Determines the precedence the policy is enforced with respect to other policies.
- Traffic Descriptor: Determines the traffic to which the policy applies to. For example it may be a match-all rule, which refers to all the traffic going through the hotspot, or in case there is a need to detect tethering on a per application basis, different sets of traffic filters (e.g. IP 3- or 5-tuples) can be included in the Traffic Descriptor.
- Tethering Descriptor: Determines the tethering enforcement actions. It may comprise:
   ∘ Tethering enforcement actions: Determines the actions to apply when tethering is detected, e.g. to block tethering traffic after a maximum number of devices are connected simultaneously or to mark (with a token) the tethered traffic e.g. with an IP Options header or with a DSCP code or source port (different for each tethered device). The latter part will allow the network (e.g. in the UPF) to detect tethered traffic and to differentiate each of the tethered devices.
   ∘ Tethering metrics for reporting: Determines the tethering metrics required to be reported, e.g. to report tethering events, report tethering volume vs UE's volume, report the number of tethering devices, etc. Alternatively, a tethering action can be explicitly invoked though some UE internal APIs.
   ∘ Destination URI: When present, it indicates the URI of the entity receiving the reports where the tethering metrics shall be forwarded to. It can be a NF IP address, or an IP of a Reporting Server. In case Destination URI is not included, it may indicate that the tethering metrics shall be forwarded to PCF (through AMF via Non-Access Stratum).

At step 216, the SMF sends a PDU session establishment response message to the UE including the tethering policy as described in the previous step. This message is relayed by the AMF.

At step 217, the UE receives and installs the tethering policy.

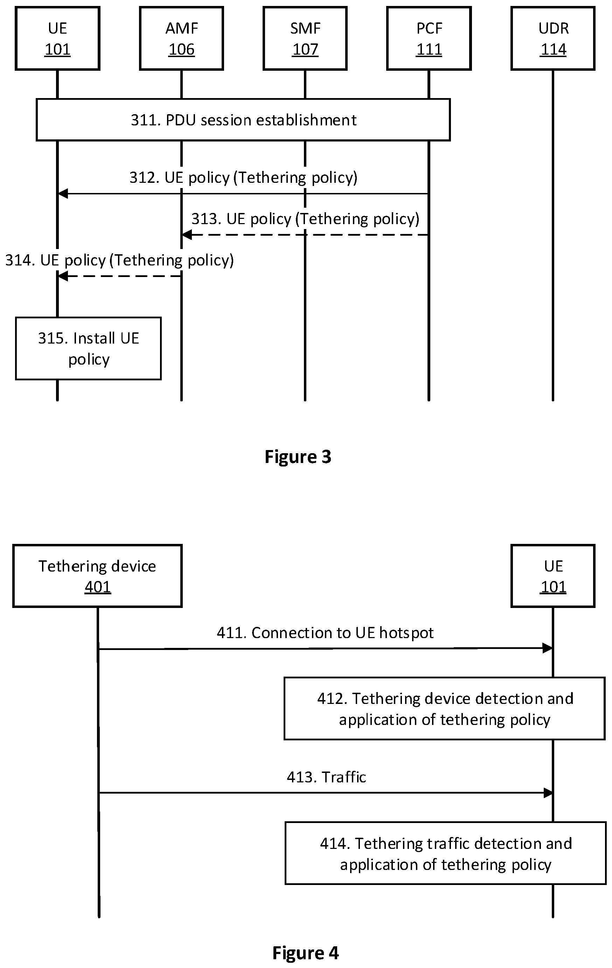

Figure 3 is a signaling diagram illustrating a procedure for provisioning tethering policies to a UE 101. In this figure, the access and mobility management entity is an AMF 106, the session management entity is a SMF 107, the policy control entity is a PCF 111 and the user data repository entity is a UDR 114. Prior to the execution of this procedure, the UDR shall be provisioned with the corresponding subscription data indicating that the UE is subject to the appropriate tethering policies.

At step 311, the PDU session establishment procedure takes place. In this step the PCF retrieves the tethering policies from UDR, e.g. as in step 213 and 214 in Figure 2.

At step 312, the PCF sends to the UE a UE policy including the tethering policy. In some embodiments, this step is based on an extension of the UE policies (generated by PCF and sent towards UE through AMF, as shown in steps 313 and 314), which allows the network operator to trigger tethering policies for the user's traffic. The tethering policy may include:
- Precedence: Determines the precedence the policy is enforced with respect to other policies.
- Traffic Descriptor: Determines the traffic to which the policy applies to. For example it may be a match-all rule, which refers to all the traffic going through the hotspot, or in case there is a need to detect tethering on a per application basis, different sets of traffic filters (e.g. IP 3- or 5-tuples) can be included in the Traffic Descriptor.
- Tethering Descriptor: Determines the tethering enforcement actions. It may comprise:
   ∘ Tethering enforcement actions: Determines the actions to apply when tethering is detected, e.g. to block tethering traffic after a maximum number of devices are connected simultaneously or to mark (with a token) the tethered traffic e.g. with an IP Options header or with a DSCP code or source port (different for each tethered device). The latter part will allow the network (e.g. in the UPF) to detect tethered traffic and to differentiate each of the tethered devices.
   ∘ Tethering metrics for reporting: Determines the tethering metrics required to be reported, e.g. to report tethering events, report tethering volume vs UE's volume, report the number of tethering devices, etc. Alternatively, a tethering action can be explicitly invoked though some UE internal APIs.
   ∘ Destination URI: When present, it indicates the URI of the entity receiving the reports where the tethering metrics shall be forwarded to. It can be a NF IP address, or an IP of a Reporting Server. In case Destination URI is not included, it may indicate that the tethering metrics shall be forwarded to PCF (through AMF via Non-Access Stratum).

Steps 313 and 314 show the case in which the AMF relies the UE policy sent from the PCF to the UE.

At step 315, the UE receives and installs the tethering policy.

Figure 4 is a signaling diagram illustrating the enforcement of the tethering policies at the UE 101 when a tethering device 401 connects to the hotspot of the UE or sends tethering traffic to the UE. Prior to the execution of this procedure, the procedure described in Figure 2 or Figure 3 shall have taken place and the UE shall have the tethering policies installed.

At step 411, the tethering device 401 connects to the hotspot of the UE.

At step 412, the UE detects the tethering device and applies the corresponding tethering policy. For example, the UE may configure to drop the traffic from the tethering device 401 if the maximum number of tethering devices has been reached, or it may not allow the tethering device to connect, or it may configure the reporting actions to perform for the tethering device 401.

At step 413, if the tethering device 401 successfully connected to the hotspot of the UE, the tethering device 401 sends traffic to the UE.

At step 414, the UE detects the tethering traffic of the tethering device 401 and applies the corresponding tethering policy. For example, the UE may drop the traffic from the tethering device 401 if the maximum number of tethering devices has been reached, it may route the traffic according to the tethering policy, it may perform the reporting actions included in the tethering policy, or it may perform the traffic marking actions included in the tethering policy.

In some embodiments, in case the UE applies a marking policy, the UE may mark the traffic (e.g. in IP Options header) with the following information:
- An indication (e.g. token) of tethering traffic, which allows the network (e.g. UPF) to detect that the traffic is tethering traffic.
- An indication of the particular tethering device, or tethering device identifier. This allows the network (e.g. UPF) to differentiate between tethering devices and to apply differentiated policies on a per tethering device basis.
- Packet Flow Descriptor (PFD), PFD set or Application identifier. This indicates the matched traffic filter or application, and allows UPF to identify the particular application that is transmitting the tethering traffic.

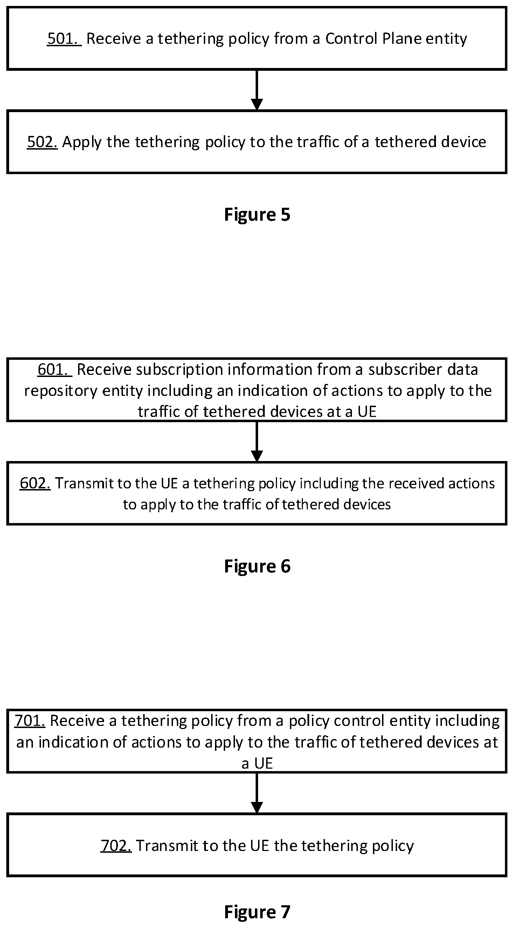

Figure 5 is a flowchart illustrating a method performed by a UE for enforcing tethering policies at said UE.

At step 501, the UE receives a tethering policy from a Control Plane entity. In some embodiments, the Control Plane entity is a PCF. In some embodiments, the Control Plane entity is an AMF. The tethering policy is as defined in step 215.

At step 502, the UE applies the tethering policy to the traffic of a tethered device. For example, the UE may drop the traffic from the tethering device if the maximum number of tethering devices has been reached, it may route the traffic according to the tethering policy, it may perform the reporting actions included in the tethering policy, or it may perform the traffic marking actions included in the tethering policy.

Figure 6 is a flowchart illustrating a method performed by a policy control entity for providing a tethering policy to a User Equipment. In some embodiments, the policy control entity is a PCF.

At step 601, the policy control entity receives subscription information from a subscriber data repository entity including an indication of actions to apply to the traffic of tethered devices at a UE.

At step 602, the policy control entity transmits to the UE a tethering policy including the received actions to apply to the traffic of tethered devices.

Figure 7 is a flowchart illustrating a method performed by an access and mobility management entity for providing a tethering policy to a User Equipment. In some embodiments, the access and mobility management entity is an AMF.

At step 701, the access and mobility management entity receives a tethering policy from a policy control entity including an indication of actions to apply to the traffic of tethered devices at a UE.

At step 702, the access and mobility management entity transmits to the UE the tethering policy.

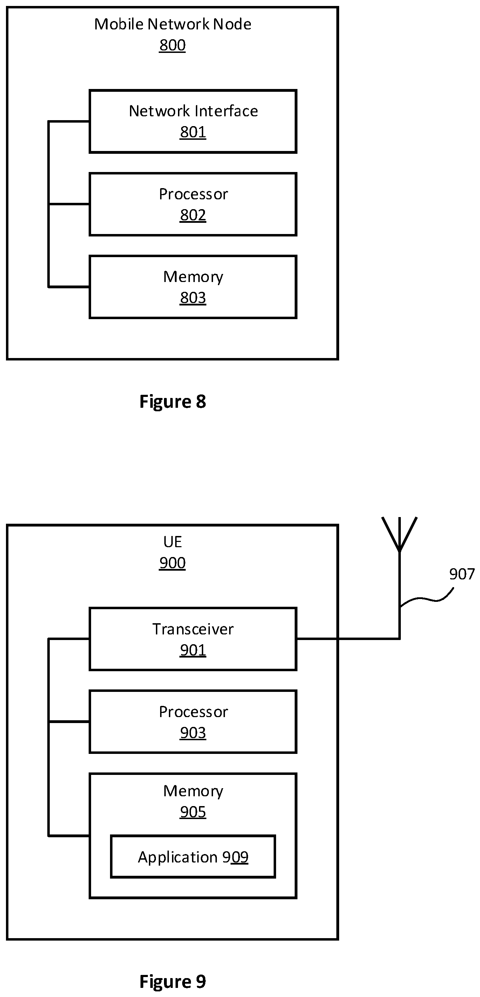

Figure 8 is a block diagram illustrating elements of a mobile network node 800 of a mobile communications network. In some embodiments, the mobile network node 800 is an AMF. In some embodiments, the mobile network node 800 is a SMF. As shown, the mobile network node may include network interface circuitry 801 (also referred to as a network interface) configured to provide communications with other nodes of the core network and/or the network. The mobile network node may also include a processing circuitry 802 (also referred to as a processor) coupled to the network interface circuitry, and memory circuitry 803 (also referred to as memory) coupled to the processing circuitry. The memory circuitry 803 may include computer readable program code that when executed by the processing circuitry 802 causes the processing circuitry to perform operations according to embodiments disclosed herein. According to other embodiments, processing circuitry 802 may be defined to include memory so that a separate memory circuitry is not required. As discussed herein, operations of the mobile network node may be performed by processing circuitry 802 and/or network interface circuitry 801. For example, processing circuitry 802 may control network interface circuitry 801 to transmit communications through network interface circuitry 801 to one or more other network nodes and/or to receive communications through network interface circuitry from one or more other network nodes. Moreover, modules may be stored in memory 803, and these modules may provide instructions so that when instructions of a module are executed by processing circuitry 802, processing circuitry 802 performs respective operations (e.g., operations discussed below with respect to Example Embodiments relating to core network nodes).

Figure 9 is a block diagram illustrating elements of a User Equipment (UE) 900 (also referred to as a communication device, a mobile terminal, a mobile communication terminal, a wireless device, a wireless communication device, a wireless terminal, mobile device, a wireless communication terminal, a user equipment node/terminal/device, etc.) configured to provide wireless communication according to embodiments of the disclosure. As shown, communication device UE may include an antenna 907, and transceiver circuitry 901 (also referred to as a transceiver) including a transmitter and a receiver configured to provide uplink and downlink radio communications with a base station(s) (also referred to as a RAN node) of a radio access network. The UE may also include processing circuitry 903 (also referred to as a processor) coupled to the transceiver circuitry, and memory circuitry 905 (also referred to as memory, e.g. corresponding to device readable medium) coupled to the processing circuitry. The memory circuitry 905 may include computer readable program code, such as application client 909, that when executed by the processing circuitry 903 causes the processing circuitry to perform operations according to embodiments disclosed herein. According to other embodiments, processing circuitry 903 may be defined to include memory so that separate memory circuitry is not required. The UE 900 may also include an interface (such as a user interface) coupled with processing circuitry 903, and/or the UE may be incorporated in a vehicle. As discussed herein, operations of the UE may be performed by processing circuitry 903 and/or transceiver circuitry 901. For example, processing circuitry 903 may control transceiver circuitry 901 to transmit communications through transceiver circuitry 901 over a radio interface to a radio access network node (also referred to as a base station) and/or to receive communications through transceiver circuitry 901 from a RAN node over a radio interface. Moreover, modules may be stored in memory circuitry 905, and these modules may provide instructions so that when instructions of a module are executed by processing circuitry 903, processing circuitry 903 performs respective operations (e.g., the operations disclosed herein with respect to the example embodiments relating to the UE).

## Claims

1. A method for enforcing tethering policies at a User Equipment, UE (101), the method comprising:
receiving (216, 312, 314), at the UE, a tethering policy from a Control Plane, CP, entity of a mobile communication system, the CP comprising a Policy Control Function, PCF (111), wherein subscription information is received (214) at the PCF from a subscriber data repository entity (114), the subscription information including an indication of actions to apply to the traffic of tethered devices at the UE;
transmitting (216,312,313) from PCF to the UE the tethering policy including the received actions to apply to the traffic of tethered devices;
applying (412, 414), by the UE, the tethering policy to the traffic of a tethered device.

2. The method of claim 1, wherein the tethering policy includes an indication to block the traffic of a tethered device.

3. The method of claim 1, wherein the tethering policy includes an indication to only allow traffic transmission of a maximum number of tethered devices connected simultaneously.

4. The method of claim 1, wherein the tethering policy includes an indication to mark the traffic of a tethered device with a specific value included in a protocol header, the value being the same for all tethered devices or different for each tethered device.

5. The method of claim 1, wherein the tethering policy includes an indication to report an event to the CP entity or another CP entity in response to the detection of traffic of a tethered device.

6. The method of claim 5, wherein the indication to report the event comprises an indication to report the number of tethered devices, the detection of a new tethered device, or the volume of the traffic of a tethered device.

7. The method of any one of claims 5 to 6, wherein applying the tethering policy comprises transmitting a report to the CP entity or another CP entity including the number of tethered devices, the detection of a new tethered device, or the volume of the traffic of a tethered device.

8. The method of any one of claims 1 to 7, wherein the tethering policy is received from the PCF in a UE Route Selection Policy, URSP.

## Patentansprüche

1. Ein Verfahren zum Durchsetzen von Tethering-Richtlinien an einem Benutzergerät, UE, (101), wobei das Verfahren Folgendes beinhaltet:
Empfangen (216, 312, 314), an dem UE, einer Tethering-Richtlinie von einer Steuerebenen-Entität, CP-Entität, eines Mobilkommunikationssystems, wobei die CP eine Richtliniensteuerfunktion, PCF, (111) beinhaltet, wobei Teilnahmeinformationen an der PCF von einer Teilnehmerdaten-Repository-Entität (114) empfangen werden (214), wobei die Teilnahmeinformationen eine Angabe von Aktionen umfassen, die auf den Verkehr von angebundenen Vorrichtungen an dem UE anzuwenden sind;
Übertragen (216, 312, 313), von der PCF an das UE, der Tethering-Richtlinie, die die empfangenen Aktionen umfasst, die auf den Verkehr von angebundenen Vorrichtungen anzuwenden sind;
Anwenden (412, 414), durch das UE, der Tethering-Richtlinie auf den Verkehr einer angebundenen Vorrichtung.

2. Verfahren gemäß Anspruch 1, wobei die Tethering-Richtlinie eine Angabe zum Blockieren des Verkehrs einer angebundenen Vorrichtung umfasst.

3. Verfahren gemäß Anspruch 1, wobei die Tethering-Richtlinie eine Angabe umfasst, um nur Verkehrsübertragung einer maximalen Anzahl von gleichzeitig verbundenen angebundenen Vorrichtungen zu erlauben.

4. Verfahren gemäß Anspruch 1, wobei die Tethering-Richtlinie eine Angabe zum Markieren des Verkehrs einer angebundenen Vorrichtung mit einem spezifischen Wert umfasst, der in einem Protokollkopf umfasst ist, wobei der Wert für alle angebundenen Vorrichtungen gleich oder für jede angebundene Vorrichtung unterschiedlich ist.

5. Verfahren gemäß Anspruch 1, wobei die Tethering-Richtlinie eine Angabe zum Melden eines Ereignisses an die CP-Entität oder eine andere CP-Entität als Reaktion auf die Erkennung von Verkehr einer angebundenen Vorrichtung umfasst.

6. Verfahren gemäß Anspruch 5, wobei die Angabe zum Melden des Ereignisses eine Angabe zum Melden der Anzahl von angebundenen Vorrichtungen, der Erkennung einer neuen angebundenen Vorrichtung oder des Volumens des Verkehrs einer angebundenen Vorrichtung beinhaltet.

7. Verfahren gemäß einem der Ansprüche 5 bis 6, wobei das Anwenden der Tethering-Richtlinie das Übertragen einer Meldung an die CP-Entität oder eine andere CP-Entität beinhaltet, die die Anzahl von angebundenen Vorrichtungen, die Erkennung einer neuen angebundenen Vorrichtung oder das Volumen des Verkehrs einer angebundenen Vorrichtung umfasst.

8. Verfahren gemäß einem der Ansprüche 1 bis 7, wobei die Tethering-Richtlinie von der PCF in einer UE-Routenauswahlrichtlinie, URSP, empfangen wird.

## Revendications

1. Un procédé pour faire observer des politiques de partage de connexion *(tethering)* au niveau d'un équipement utilisateur, UE (101), le procédé comprenant :
la réception (216, 312, 314), au niveau de l'UE, d'une politique de partage de connexion en provenance d'une entité de plan de commande, CP, d'un système de communication mobile, le CP comprenant une fonction de commande de politique, PCF (111), où des informations d'abonnement sont reçues (214) au niveau de la PCF en provenance d'une entité de référentiel de données d'abonné (114), les informations d'abonnement incluant une indication d'actions à appliquer au trafic de dispositifs faisant l'objet d'un partage de connexion au niveau de l'UE ;
la transmission (216, 312, 313) de la PCF à l'UE de la politique de partage de connexion incluant les actions reçues à appliquer au trafic de dispositifs faisant l'objet d'un partage de connexion ;
l'application (412, 414), par l'UE, de la politique de partage de connexion au trafic d'un dispositif faisant l'objet d'un partage de connexion.

2. Le procédé de la revendication 1, où la politique de partage de connexion inclut une indication de bloquer le trafic d'un dispositif faisant l'objet d'un partage de connexion.

3. Le procédé de la revendication 1, où la politique de partage de connexion inclut une indication d'autoriser uniquement une transmission de trafic d'un nombre maximal de dispositifs faisant l'objet d'un partage de connexion connectés simultanément.

4. Le procédé de la revendication 1, où la politique de partage de connexion inclut une indication de marquer le trafic d'un dispositif faisant l'objet d'un partage de connexion avec une valeur spécifique incluse dans un en-tête de protocole, la valeur étant la même pour tous les dispositifs faisant l'objet d'un partage de connexion ou différente pour chaque dispositif faisant l'objet d'un partage de connexion.

5. Le procédé de la revendication 1, où la politique de partage de connexion inclut une indication de rapporter un événement à l'entité CP ou à une autre entité CP en réponse à la détection de trafic d'un dispositif faisant l'objet d'un partage de connexion.

6. Le procédé de la revendication 5, où l'indication de rapporter l'événement comprend une indication de rapporter le nombre de dispositifs faisant l'objet d'un partage de connexion, la détection d'un nouveau dispositif faisant l'objet d'un partage de connexion, ou le volume du trafic d'un dispositif faisant l'objet d'un partage de connexion.

7. Le procédé de l'une quelconque des revendications 5 à 6, où l'application de la politique de partage de connexion comprend la transmission d'un rapport à l'entité CP ou à une autre entité CP incluant le nombre de dispositifs faisant l'objet d'un partage de connexion, la détection d'un nouveau dispositif faisant l'objet d'un partage de connexion, ou le volume du trafic d'un dispositif faisant l'objet d'un partage de connexion.

8. Le procédé de l'une quelconque des revendications 1 à 7, où la politique de partage de connexion est reçue en provenance de la PCF dans une politique de sélection d'itinéraire d'UE, URSP.
